# EUROPEAN PATENT APPLICATION

(11) **EP 4 786 243 A1**
(43) Date of publication of application: **05.08.2026**
(21) Application number: 24869567.8
(22) Date of filing: 30.01.2024
(51) Int. Cl.: B60L 3/00, B60L 58/00, G01R 31/00

(54) **HAZARDOUS VOLTAGE INTERLOCK LOOP FAULT DETECTION METHOD AND SYSTEM, ELECTRIC ENERGY DEVICE, AND MEDIUM**

(30) Priority: 28.09.2023 CN 202311289972
(71) Applicant: BYD Company Limited, Shenzhen, Guangdong 518118 (CN)
(72) Inventor: SHI, Qian, Shenzhen, Guangdong 518118 (CN)
(74) Representative: Taor, Simon Edward William
(86) International application number: PCT/CN2024/074801
(87) International publication number: WO 2025/065995

(57) **Abstract**

A high-voltage interlock loop fault detection method and system, an electric energy device, and a medium are provided. The method includes: in response to detecting a high-voltage power-on request, performing fault detection on a high-voltage interlock loop to determine fault information of the high-voltage interlock loop; and if the high-voltage interlock loop is not faulty, controlling a high-voltage system in which the high-voltage interlock loop is located to be powered on, and performing fault detection on the high-voltage interlock loop to determine fault information of the high-voltage interlock loop after power-on. Duration of the fault detection performed before the high-voltage system is powered on is less than duration of the fault detection performed after the high-voltage system is powered on.

## Description

### CROSS-REFERENCE TO RELATED APPLICATIONS

The present disclosure claims priority to Chinese Patent Application No. 202311289972.2, filed with the China National Intellectual Property Administration on September 28, 2023 and entitled "HIGH-VOLTAGE INTERLOCK LOOP FAULT DETECTION METHOD AND SYSTEM, ELECTRIC ENERGY DEVICE, AND MEDIUM", which is incorporated herein by reference in its entirety.

### TECHNICAL FIELD

This disclosure relates to the field of new energy vehicles, specifically to a high-voltage interlock loop fault detection method and system, an electric energy device, and a medium.

### BACKGROUND

A new energy vehicle uses a high-voltage system to power high-voltage components on the vehicle. A high-voltage plug on the high-voltage system is disposed with a high-voltage interlock loop (High-Voltage Interlock Loop, HVIL). A battery management system (Battery Management System, BMS) of the vehicle detects a fault in the high-voltage interlock loop to determine whether the high-voltage system is allowed to be powered on, so as to ensure electrical safety. However, fault detection requirements for the high-voltage interlock loop vary under different operating conditions. A current high-voltage interlock loop fault detection method has poor flexibility and cannot match the detection requirements under different operating conditions.

### SUMMARY

The main purpose of this disclosure is to provide a high-voltage interlock loop fault detection method and system, an electrical energy device, and a medium, to resolve the technical problem that an existing high-voltage interlock loop fault detection method cannot meet detection requirement under different operating conditions.

According to a first aspect of embodiments of the present disclosure, a high-voltage interlock loop fault detection method is provided, including:
in response to detecting a high-voltage power-on request, performing fault detection on a high-voltage interlock loop to determine fault information of the high-voltage interlock loop, where the fault information is configured to represent whether the high-voltage interlock loop is faulty; and
if the high-voltage interlock loop is not faulty, controlling a high-voltage system in which the high-voltage interlock loop is located to be powered on, and performing fault detection on the high-voltage interlock loop to determine fault information of the high-voltage interlock loop after power-on, where
duration of the fault detection performed before the high-voltage system is powered on is less than duration of the fault detection performed after the high-voltage system is powered on.

Optionally, performing fault detection on the high-voltage interlock loop to determine the fault information of the high-voltage interlock loop includes:
performing a plurality of times of consecutive fault detection on the high-voltage interlock loop to determine the fault information of the high-voltage interlock loop.

Optionally, the fault information includes a fault result and a fault type, and
performing the plurality of times of consecutive fault detection on the high-voltage interlock loop to determine the fault information of the high-voltage interlock loop includes:
generating a plurality of consecutive first pulse signals;
for each first pulse signal, sending the first pulse signal to a high-voltage plug; collecting the first pulse signal and a second pulse signal that is correspondingly output by the high-voltage plug; based on the first pulse signal and the second pulse signal, determining the fault type of the high-voltage interlock loop, or determining that the high-voltage interlock loop is not faulty; and
determining the fault result of the high-voltage interlock loop based on each fault type.

Optionally, a signal period of the first pulse signal generated before the high-voltage system is powered on is less than a signal period of the first pulse signal generated after the high-voltage system is powered on.

Optionally, times of fault detection performed in a fault detection cycle before the high-voltage system is powered on is equal to or less than times of fault detection performed in a fault detection cycle after the high-voltage system is powered on.

Optionally, a number of first pulse signals generated in a fault detection cycle before the high-voltage system is powered on is less than a number of first pulse signals generated in a fault detection cycle after the high-voltage system is powered on.

Optionally, a signal period of the first pulse signal generated before the high-voltage system is powered on is equal to a signal period of the first pulse signal generated after the high-voltage system is powered on.

Optionally, based on the first pulse signal and the second pulse signal, determining the fault type of the high-voltage interlock loop includes:
determining a signal collection period and a first pulse width of the first pulse signal, and a second pulse width of the second pulse signal; and
determining the fault type of the high-voltage interlock loop based on the signal collection period, the first pulse width, and the second pulse width.

Optionally, the fault type includes open circuit, short circuit to ground, short circuit to power supply, and invalid pulse signal; and
determining the fault type of the high-voltage interlock loop based on the signal collection period, the first pulse width, and the second pulse width includes:
if the signal collection period is the same as a signal generation period of the first pulse signal, the first pulse width is the same as a pulse generation width of the first pulse signal, and the second pulse width is zero, determining that the fault type of the high-voltage interlock loop is the open circuit;
if both the first pulse width and the second pulse width are equal to zero, determining that the fault type of the high-voltage interlock loop is the short circuit to ground;
if the signal collection period is the same as the signal generation period, the first pulse width is the same as the pulse generation width, and the second pulse width is equal to the signal generation period, determining that the fault type of the high-voltage interlock loop is the short circuit to power supply; and
if the signal collection period is different from the signal generation period, or the first pulse width is different from the pulse generation width and the first pulse width is not equal to zero, determining that the fault type of the high-voltage interlock loop is the invalid pulse signal.

Optionally, determining the fault result of the high-voltage interlock loop based on each fault type includes:
when a ratio of a number of fault types to times of detection is greater than a preset ratio, determining that the high-voltage interlock loop is faulty, where the times of detection is a sum of the number of fault types and times of non-fault detection.

According to a second aspect of embodiments of the present disclosure, a high-voltage interlock loop fault detection system is provided, including: a controller; and
the controller is configured to:
in response to detecting a high-voltage power-on request, perform fault detection on a high-voltage interlock loop to determine fault information of the high-voltage interlock loop, where the fault information is configured to represent whether the high-voltage interlock loop is faulty; and
if the high-voltage interlock loop is not faulty, control a high-voltage system in which the high-voltage interlock loop is located to be powered on, and perform fault detection on the high-voltage interlock loop to determine fault information of the high-voltage interlock loop after power-on, where
duration of the fault detection performed before the high-voltage system is powered on is less than duration of the fault detection performed after the high-voltage system is powered on.

Optionally, the fault information includes a fault result and a fault type.

The fault detection system further includes: a signal generator, a signal detection unit, and a signal feedback unit, where the signal detection unit is connected to a high-voltage plug, and the signal generator is connected to the signal feedback unit.

The controller is separately connected to the signal generator, the signal detection unit, and the signal feedback unit, and is configured to:
control the signal generator to generate a plurality of consecutive first pulse signals;
for each first pulse signal, send the first pulse signal to the high-voltage plug; collect the first pulse signal generated by the signal generator through the signal feedback detection unit, and detect a second pulse signal correspondingly output by the high-voltage plug through the signal detection unit; and based on the first pulse signal and the second pulse signal, determine the fault type of the high-voltage interlock loop, or determine that the high-voltage interlock loop is not faulty; and
determine the fault result of the high-voltage interlock loop based on each fault type.

According to a third aspect of embodiments of the present disclosure, a battery management system is provided, including the high-voltage interlock loop fault detection system provided in the second aspect of the present disclosure.

According to a fourth aspect of embodiments of the present disclosure, an electric energy device is provided, including the battery management system provided in the third aspect of the present disclosure.

According to a fifth aspect of embodiments of the present disclosure, a computer-readable storage medium is provided, where the computer-readable storage medium stores a computer program, and when the program is executed by a processing apparatus, steps of the high-voltage interlock loop fault detection method provided in the first aspect of the present disclosure are implemented.

In the technical solutions provided in embodiments of the present disclosure, duration of fault detection performed before a high-voltage system is powered on is less than duration of fault detection performed after the high-voltage system is powered on. In other words, before the high-voltage system is powered on, fault detection with short duration is performed on a high-voltage interlock loop, so that detection time of the high-voltage interlock loop before power-on of the high-voltage system can be shortened, and power-on waiting time of a high-voltage component can be reduced. If it is determined that the high-voltage interlock loop is not faulty, the high-voltage system is controlled to be powered on, so that the high-voltage component enters a normal operating state. Then, fault detection with long duration is performed on the high-voltage interlock loop. In this case, because the detection duration of the fault detection performed after the high-voltage system is powered on is long, detection efficiency of the fault detection performed after the high-voltage system is powered on is lower in comparison with that of the fault detection performed before the high-voltage system is powered on, leading to less consumption of detection resources of a battery management system. In this way, different pieces of fault detection duration are set to match different real-time detection requirements, to meet detection requirements under different operating conditions. Furthermore, the detection resources of the battery management system can be properly allocated, improving flexibility of the fault detection on the high-voltage interlock loop.

Other features and advantages of the present disclosure will be described in detail in the following description of embodiments.

### BRIEF DESCRIPTION OF DRAWINGS

The accompanying drawings are provided to further understand the present disclosure and form a part of this specification, and are configured together with the following description of embodiments to explain the present disclosure, but do not constitute a limitation thereof. In the accompanying drawings:
FIG. 1 is a flowchart of a high-voltage interlock loop fault detection method according to an embodiment of the present disclosure;
FIG. 2 is a block diagram of a high-voltage interlock loop fault detection system according to an embodiment of the present disclosure; and
FIG. 3 is a block diagram of an electronic device involved in an embodiment of the present disclosure.

### DESCRIPTION OF EMBODIMENTS

The specific embodiments of this disclosure is described in detail below with reference to the accompanying drawings. It should be understood that the specific embodiments described herein is for illustrative and explanatory purposes only and is not intended to limit the present disclosure.

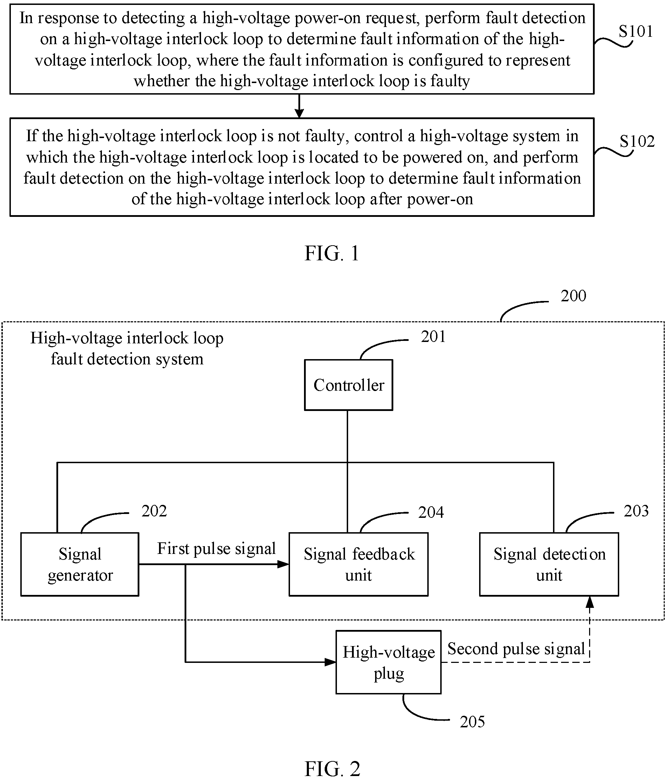

FIG. 1 is a flowchart of a high-voltage interlock loop fault detection method according to an embodiment of the present disclosure. The method may be applied to a high-voltage interlock loop fault detection system, the system belongs to a battery management system of an electric energy device, and the electric energy device may be a vehicle, an energy storage cabinet, an aircraft, or another device with a high-voltage interlock loop. As shown in FIG. 1, the method may include the following steps.

S101: In response to detecting a high-voltage power-on request, perform fault detection on a high-voltage interlock loop to determine fault information of the high-voltage interlock loop, where the fault information is configured to represent whether the high-voltage interlock loop is faulty.

In the present disclosure, the high-voltage power-on request can be determined based on a high-voltage power-on signal by receiving high-voltage power-on signals of an entire vehicle, where the high-voltage power-on signal includes one or more types. In other words, the high-voltage power-on request can be determined, based on the received high-voltage power-on signals, by receiving one or more types of vehicle high-voltage power-on signals.

For example, the high-voltage power-on signals may be collected by using a plurality of sensors, that is, a plurality of types of high-voltage power-on signals may be collected by using the plurality of sensors, and subsequently the high-voltage power-on signals collected by the sensors may be received.

For example, whether a driver is in a driver seat is detected, and when the driver is detected, the high-voltage power-on request may be determined. When the driver remotely operates a vehicle app to request to upgrade a non-electric drive system software, the high-voltage power-on request may be determined. When the driver operates a mobile app to remotely turn on an air conditioner, the high-voltage power-on request may be determined. When the driver has a charging demand and inserts a charging connector, the high-voltage power-on request may be determined. When fast charging is detected, the high-voltage power-on request may be determined. When a remote charging start signal is received, the high-voltage power-on request may be determined. When low-voltage battery depletion is detected, the high-voltage power-on request may be determined.

Before high-voltage power-on, the high-voltage interlock loop fault detection system performs fault detection to determine the fault information of the high-voltage interlock loop, so as to determine whether a fault occurs. If no fault is detected at this time, high-voltage power-on is allowed; and if a fault is detected at this time, high-voltage power-on is not allowed, to avoid dangerous situations such as electric leakage, thereby ensuring safety of a new energy vehicle.

S102: If the high-voltage interlock loop is not faulty, control a high-voltage system in which the high-voltage interlock loop is located to be powered on, and perform fault detection on the high-voltage interlock loop to determine fault information of the high-voltage interlock loop after power-on.

In the present disclosure, duration of the fault detection performed before the high-voltage system is powered on is less than duration of the fault detection performed after the high-voltage system is powered on.

In an implementation, the fault detection performed before the high-voltage system is powered on and the fault detection performed after the high-voltage system is powered on each are considered as one time of fault detection, and fault detection on the high-voltage interlock loop is performed based on a preset time interval. Performing fault detection on the high-voltage interlock loop to determine the fault information of the high-voltage interlock loop includes: performing one time of fault detection on the high-voltage interlock loop to determine the fault information of the high-voltage interlock loop.

In another implementation, the fault detection performed before the high-voltage system is powered on and the fault detection performed after the high-voltage system is powered on each are a plurality of times of consecutive fault detection, where the plurality of times of consecutive fault detection are a complete round of fault detection. Performing fault detection on the high-voltage interlock loop to determine the fault information of the high-voltage interlock loop includes: performing a plurality of times of consecutive fault detection on the high-voltage interlock loop to determine the fault information of the high-voltage interlock loop. Total duration of the plurality of times of fault detection performed before the high-voltage system is powered on is less than total duration of the plurality of times of fault detection performed after the high-voltage system is powered on.

When it is determined that the high-voltage interlock loop is not faulty, the high-voltage system in which the high-voltage interlock loop is located is controlled to be powered on, so that a high-voltage component is successfully powered on and a battery enters a charging or discharging operating state. Then, fault detection continues to be performed on the high-voltage interlock loop. After the high-voltage system is powered on, fault detection may be performed on the high-voltage interlock loop based on a preset cycle, and a plurality of rounds of fault detection may be consecutively performed. When a fault is detected in the high-voltage interlock loop, fault alarm may be issued and a corresponding fault handling strategy may be executed, such as delaying disconnection of a high voltage or powering off a high voltage.

It should be noted that duration of a single time of fault detection performed before the high-voltage system is powered on may be the same as, or may be different from, duration of a single time of fault detection performed after the high-voltage system is powered on. Similarly, times of fault detection performed before the high-voltage system is powered on may be the same as, or may be different from, times of fault detection in each round of fault detection performed after the high-voltage system is powered on.

Different from S101, in S102, fault detection occurs after the high-voltage system is powered on, and in this case, the high-voltage component is in a normal operating condition, so that total duration of the fault detection on the high-voltage interlock loop is long. However, in S101, fault detection occurs before the high-voltage system is powered on, and in this case, the high-voltage component is waiting for high-voltage power-on. Fault detection with short duration is performed on the high-voltage interlock loop, so that whether the high-voltage interlock loop is faulty can be determined as soon as possible, thereby reducing high-voltage power-on waiting time. In addition, shorter duration of the fault detection on the high-voltage interlock loop indicates higher detection efficiency and greater consumption of detection resources of the battery management system. Because the detection resources of the battery management system are limited, the detection resources can be properly allocated by setting different pieces of duration of fault detection on the high-voltage interlock loop. Because the fault detection performed after the high-voltage system is powered on has low requirements for detection efficiency, the duration of the fault detection performed after the high-voltage system is powered on can be set to long time to save the detection resources of the battery management system.

The technical solutions provided in embodiments of the present disclosure may include the following beneficial effect: the duration of fault detection performed before the high-voltage system is powered on is less than the duration of fault detection performed after the high-voltage system is powered on. In other words, before the high-voltage system is powered on, fault detection with the short duration is performed on the high-voltage interlock loop, so that the detection time of the high-voltage interlock loop before power-on can be shortened, and power-on waiting time of the high-voltage component can be reduced. If it is determined that the high-voltage interlock loop is not faulty, the high-voltage system is controlled to be powered on, so that the high-voltage component enters the normal operating state. Then, fault detection with the long duration is performed on the high-voltage interlock loop. In this case, because the detection duration of the fault detection performed after the high-voltage system is powered on is long, detection efficiency of the fault detection performed after the high-voltage system is powered on is lower in comparison with that of the fault detection performed before the high-voltage system is powered on, leading to less consumption of the detection resources of the battery management system. In this way, different pieces of fault detection duration are set to match different real-time detection requirements, to meet detection requirements under different operating conditions. Furthermore, the detection resources of the battery management system can be properly allocated, improving flexibility of the fault detection on the high-voltage interlock loop.

As an optional implementation, fault information includes a fault result and a fault type.

In the present disclosure, the fault information includes a fault result configured to represent whether a fault has occurred, and further includes the fault type, such as open circuit, short circuit to ground, short circuit to power supply, and invalid pulse signal.

In this case, a plurality of times of fault detection are consecutively performed on the high-voltage interlock loop to determine the fault information of the high-voltage interlock loop, including: generating a plurality of consecutive first pulse signals; for each first pulse signal, sending the first pulse signal to a high-voltage plug; collecting the first pulse signal and a second pulse signal that is correspondingly output by the high-voltage plug; based on the first pulse signal and the second pulse signal, determining the fault type of the high-voltage interlock loop, or determining that the high-voltage interlock loop is not faulty; and determining the fault result of the high-voltage interlock loop based on each fault type.

In an embodiment of the present disclosure, the first pulse signal may be a high or low level signal, a high or low current signal, and the like. The plurality of consecutive first pulse signals are generated within a period of time for the plurality of times of continuous fault detection. Each first pulse signal is used for one time of fault detection to provide data samples and increase accuracy and reliability of fault determining.

As an optional implementation, a signal period of the first pulse signal generated before the high-voltage system is powered on is less than a signal period of the first pulse signal generated after the high-voltage system is powered on.

In an embodiment of the present disclosure, the signal period of the first pulse signal is adjustable. A length of the signal period of the first pulse signal may be changed to adjust total duration of a plurality of times of fault detection performed before and after the high-voltage system is powered on. In this way, the total duration of the plurality of times of fault detection performed before the high-voltage system is powered on is less than the total duration of the plurality of times of fault detection performed after the high-voltage system is powered on, thereby meeting detection requirements under different operating conditions.

In this case, times of fault detection performed in a fault detection cycle before the high-voltage system is powered on is equal to or less than times of fault detection performed in a fault detection cycle after the high-voltage system is powered on.

As an optional implementation, a number of first pulse signals generated in a fault detection cycle before the high-voltage system is powered on is less than a number of first pulse signals generated in a fault detection cycle after the high-voltage system is powered on.

In an embodiment of the present disclosure, the number of first pulse signals generated may be changed to adjust the total duration of the plurality of times of fault detection performed before and after the high-voltage system is powered on. In this way, the total duration of the plurality of times of fault detection performed before the high-voltage system is powered on is less than the total duration of the plurality of times of fault detection performed after the high-voltage system is powered on, thereby meeting the detection requirements under different operating conditions.

In this case, the signal period of the first pulse signal generated before the high-voltage system is powered on is equal to the signal period of the first pulse signal generated after the high-voltage system is powered on.

In an embodiment of the present disclosure, the first pulse signal may be generated by a signal generator. The signal generator then inputs the generated first pulse signal into a high-voltage plug. A signal detection unit can be configured to detect a signal output from the high-voltage plug (namely, a second pulse signal). Simultaneously, a signal feedback unit can be used collect the first pulse signal generated by the signal generator, that is, perform signal feedback after the signal is generated. Next, the collected first pulse signal and the detected second pulse signal are configured to perform fault analysis on the high-voltage interlock loop, and generate fault information of a single time of fault detection. The fault information is a type of a fault occurred in the high-voltage interlock loop or indicates that the high-voltage interlock loop is not faulty. Therefore, the fault information of each time of fault detection may be obtained.

As an optional implementation, based on the first pulse signal and the second pulse signal, determining the fault type of the high-voltage interlock loop includes: determining a signal collection period and a first pulse width of the first pulse signal, and a second pulse width of the second pulse signal; and determining the fault type of the high-voltage interlock loop based on the signal collection period, the first pulse width, and the second pulse width.

In an embodiment of the present disclosure, the fault type of the high-voltage interlock loop in this time of fault detection is determined based on collected signal parameters of the first pulse signal (namely, the signal collection period and the collected first pulse width) and the collected signal parameter of the second pulse signal (namely, the second pulse width).

For example, the first pulse signal and the second pulse signal are high and low level signals. The generation signal period and the generation pulse width of the first pulse signal are set. In general, the generation pulse width of the pulse signal is set to be half of the generation signal period by default. After generating the first pulse signal based on the foregoing settings, feedback is performed on the first pulse signal to determine the signal period (namely, the signal collection period) and the first pulse width (namely, duration of a high level in the collected first pulse signal) of the collected first pulse signal. Then, the second pulse signal output by the high-voltage plug is collected, and the second pulse width (namely, duration of a high level in the second pulse signal) is determined. Finally, based on the signal collection period, the first pulse width, and the second pulse width, the fault type of the high-voltage interlock loop in this time of fault detection is determined.

As an optional implementation, fault types existing in the high-voltage interlock loop include four types: open circuit, short circuit to ground, short circuit to power supply, and invalid pulse signal. Specifically:
if the signal collection period is the same as the signal generation period, the first pulse width is the same as the pulse generation width, and the second pulse width is zero (namely, continuous low level), then the high-voltage interlock loop is determined to be open-circuited. If the signal collection period is the same as the signal generation period, the first pulse width is the same as the pulse generation width, and the second pulse width is equal to the signal generation period (namely, continuous high level), then the high-voltage interlock loop is determined to be short-circuited to power supply. If the first pulse width is equal to zero (namely, continuous low level), and the second pulse width is equal to zero, then the high-voltage interlock loop is determined to be short-circuited to ground. If the signal collection period is different from the signal generation period, or the first pulse width is different from the pulse generation width, and the first pulse width is not equal to zero, then the pulse signal is determined to be invalid.

Based on the signal collection period, first pulse width, and second pulse width, if the high-voltage interlock loop is determined to belong to any of the above fault types, then the high-voltage interlock loop is determined to be faulty in this time of fault detection. If the fault type is empty, it is determined that no fault occurs in the high-voltage interlock loop during this time of fault detection.

As an optional implementation, determining the fault result of the high-voltage interlock loop based on each fault type includes: when a ratio of a number of fault types to times of detection is greater than a preset ratio, determining that the high-voltage interlock loop is faulty, where the times of detection is a sum of the number of fault types and times of non-fault detection.

When a ratio of a quantity of pieces of fault information that indicates a fault in the high-voltage interlock loop (namely, a number of fault types) and that is in a plurality of pieces of information to times of detection (namely, a sum of the number of fault types and the quantity of times of non-fault detection on the high-voltage interlock loop) is greater than a preset ratio, it can be determined that the high-voltage interlock loop is faulty.

The present disclosure also provides a high-voltage interlock loop fault detection system 200, where the fault detection system includes a controller 201.

The controller is configured to:
in response to detecting a high-voltage power-on request, perform fault detection on a high-voltage interlock loop to determine fault information of the high-voltage interlock loop, where the fault information is configured to represent whether the high-voltage interlock loop is faulty; and
if the high-voltage interlock loop is not faulty, control a high-voltage system in which the high-voltage interlock loop is located to be powered on, and perform fault detection on the high-voltage interlock loop to determine fault information of the high-voltage interlock loop after power-on, where
duration of the fault detection performed before the high-voltage system is powered on is less than duration of the fault detection performed after the high-voltage system is powered on.

The technical solutions provided in embodiments of the present disclosure may include the following beneficial effect: the duration of fault detection performed before the high-voltage system is powered on is less than the duration of fault detection performed after the high-voltage system is powered on. In other words, before the high-voltage system is powered on, fault detection with the short duration is performed on the high-voltage interlock loop, so that the detection time of the high-voltage interlock loop before power-on can be shortened, and power-on waiting time of the high-voltage component can be reduced. If it is determined that the high-voltage interlock loop is not faulty, the high-voltage system is controlled to be powered on, so that the high-voltage component enters the normal operating state. Then, fault detection with the long duration is performed on the high-voltage interlock loop. In this case, because the detection duration of the fault detection performed after the high-voltage system is powered on is long, detection efficiency of the fault detection performed after the high-voltage system is powered on is lower in comparison with that of the fault detection performed before the high-voltage system is powered on, leading to less consumption of the detection resources of the battery management system. In this way, different pieces of fault detection duration are set to match different real-time detection requirements, to meet detection requirements under different operating conditions. Furthermore, the detection resources of the battery management system can be properly allocated, improving flexibility of the fault detection on the high-voltage interlock loop.

Optionally, the controller is configured to:
perform a plurality of times of consecutive fault detection on the high-voltage interlock loop to determine the fault information of the high-voltage interlock loop.

Optionally, the fault information includes a fault result and a fault type. As shown in FIG. 2, the fault detection system further includes: a signal generator 202, a signal detection unit 203, and a signal feedback unit 204, where the signal detection unit is connected to a high-voltage plug 205, and the signal generator is connected to the signal feedback unit.

The controller is separately connected to the signal generator, the signal detection unit, and the signal feedback unit, and is configured to:
control the signal generator to generate a plurality of consecutive first pulse signals;
for each first pulse signal, send the first pulse signal to the high-voltage plug; collect the first pulse signal generated by the signal generator through the signal feedback detection unit, and detect a second pulse signal correspondingly output by the high-voltage plug through the signal detection unit; and based on the first pulse signal and the second pulse signal, determine the fault type of the high-voltage interlock loop, or determine that the high-voltage interlock loop is not faulty; and
determine the fault result of the high-voltage interlock loop based on each fault type.

Optionally, a signal period of the first pulse signal generated before the high-voltage system is powered on is less than a signal period of the first pulse signal generated after the high-voltage system is powered on.

Optionally, times of fault detection performed in a fault detection cycle before the high-voltage system is powered on is equal to or less than times of fault detection performed in a fault detection cycle after the high-voltage system is powered on.

Optionally, a number of first pulse signals generated in a fault detection cycle before the high-voltage system is powered on is less than a number of first pulse signals generated in a fault detection cycle after the high-voltage system is powered on.

Optionally, a signal period of the first pulse signal generated before the high-voltage system is powered on is equal to a signal period of the first pulse signal generated after the high-voltage system is powered on.

Optionally, the controller is configured to:
determine a signal collection period and a first pulse width of the first pulse signal, and a second pulse width of the second pulse signal; and
determine the fault type of the high-voltage interlock loop based on the signal collection period, the first pulse width, and the second pulse width.

Optionally, the fault type includes open circuit, short circuit to ground, short circuit to power supply, and invalid pulse signal; and
the controller is configured to:
if the signal collection period is the same as a signal generation period of the first pulse signal, the first pulse width is the same as a pulse generation width of the first pulse signal, and the second pulse width is zero, determine that the fault type of the high-voltage interlock loop is the open circuit;
if both the first pulse width and the second pulse width are equal to zero, determine that the fault type of the high-voltage interlock loop is the short circuit to ground;
if the signal collection period is the same as the signal generation period, the first pulse width is the same as the pulse generation width, and the second pulse width is equal to the signal generation period, determine that the fault type of the high-voltage interlock loop is the short circuit to power supply; and
if the signal collection period is different from the signal generation period, or the first pulse width is different from the pulse generation width and the first pulse width is not equal to zero, determine that the fault type of the high-voltage interlock loop is the invalid pulse signal.

Optionally, the controller is configured to:
when a ratio of a number of fault types to times of detection is greater than a preset ratio, determine that the high-voltage interlock loop is faulty, where the times of detection is a sum of the number of fault types and times of non-fault detection.

For the high-voltage interlock loop fault detection system in the foregoing embodiments, the specific execution methods of the controller and other modules have been described in detail in the related embodiments, and are not be elaborated herein.

The present disclosure further provides a battery management system, including the high-voltage interlock loop fault detection system provided in the present disclosure.

The present disclosure further provides an electric energy device, including the battery management system provided in the present disclosure.

The present disclosure further provides a computer-readable storage medium, where the computer-readable storage medium stores a computer program, and when the program is executed by a processing apparatus, steps of the high-voltage interlock loop fault detection method provided in the present disclosure are implemented.

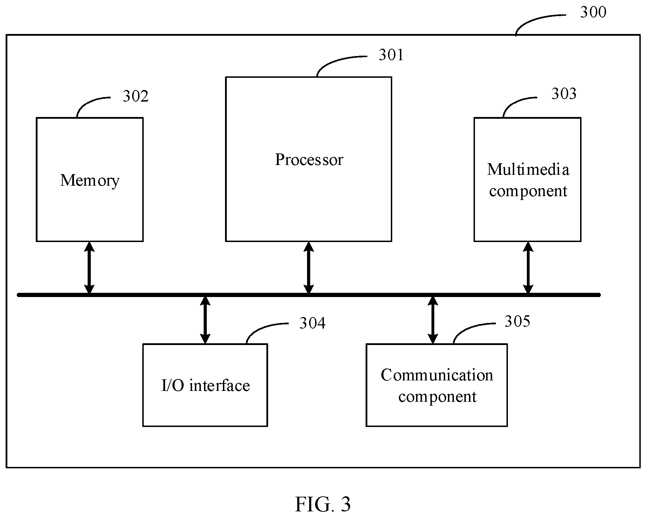

FIG. 3 is a block diagram of an electronic device involved in an embodiment of the present disclosure. As shown in FIG. 3, the electronic device 300 may include: a processor 301 and a memory 302. The electronic device 300 may further include one or more of the following: a multimedia component 303, an input/output (I/O) interface 304, and a communication component 305.

The processor 301 is configured to control an overall operation of the electronic device 300 to complete all or a part of the steps in the high-voltage interlock loop fault detection method described above. The memory 302 is configured to store various types of data to support the operation on the electronic device 300. The data may include, for example, instructions for any application or method operating on the electronic device 300, as well as application-related data such as contact data, sent and received messages, pictures, audio, videos, and the like. The memory 302 can be implemented by any type of volatile or non-volatile storage device or a combination thereof, for example, a static random access memory (Static Random Access Memory, SRAM), an electrically erasable programmable read-only memory (Electrically Erasable Programmable Read-Only Memory, EEPROM), an erasable programmable read-only memory (Erasable Programmable Read-Only Memory, EPROM), a programmable read-only memory (Programmable Read-Only Memory, PROM), a read-only memory (Read-Only Memory, ROM), a magnetic memory, a flash memory, a magnetic disk, or an optical disc. The multimedia component 303 may include a screen and an audio component. The screen, for example, may be a touchscreen, and the audio component is configured to output and/or input an audio signal. For example, the audio component may include a microphone, the microphone is configured to receive an external audio signal. The received audio signal may be further stored in the memory 302 or transmitted through the communication component 305. The audio component further includes at least one speaker for outputting the audio signal. The I/O interface 304 provides an interface between the processor 301 and another interface module. The another interface module mentioned above may be a keyboard, a mouse, a button, and the like. These buttons may be either virtual or physical buttons. The communication component 305 is used for wired or wireless communication between the electronic device 300 and other devices. The wireless communication, such as Wi-Fi, Bluetooth, near field communication (Near Field Communication, NFC), 2G, 3G, 4G, NB-IoT, eMTC, or other 5G, or one or more combinations thereof, is not limited here. Therefore, the corresponding communication component 305 may include: a Wi-Fi module, a Bluetooth module, an NFC module, and the like.

In some embodiments, the electronic device 300 may be implemented by one or more application-specific integrated circuits (Application Specific Integrated Circuit, ASIC), digital signal processors (Digital Signal Processor, DSP), digital signal processing devices (Digital Signal Processing Device, DSPD), programmable logic devices (Programmable Logic Device, PLD), field-programmable gate arrays (Field Programmable Gate Array, FPGA), controllers, microcontrollers, microprocessors, or other electron components, to perform the high-voltage interlock loop fault detection method.

In addition, in an embodiment, an embodiment of the present disclosure further provides a computer-readable storage medium including program instructions, and when the program instructions are executed by a processor, the steps of the high-voltage interlock loop fault detection method are implemented. For example, the computer-readable storage medium may be the memory 302 that includes the program instructions, and the program instructions may be executed by the processor 301 of the electronic device 300 to complete the high-voltage interlock loop fault detection method.

In addition, in an embodiment, the present disclosure further provides a computer program product. The computer program product includes a computer program that can be executed by a programmable device, and the computer program have code portions which, when executed by the programmable device, are configured to perform the high-voltage interlock loop fault detection method.

The preferred implementation of the present disclosure has been described in detail above with reference to the accompanying drawings. However, the present disclosure is not limited to the specific details described above. Within the technical concept of the present disclosure, it is possible to make various simple modifications to the technical solution scheme of the present disclosure, and these simple modifications all fall within the protection scope of the present disclosure.

It should also be noted that the various specific technical features described in the above descriptions of embodiments may be combined in any suitable manner, provided there is no contradiction. To avoid unnecessary repetition, the present disclosure does not elaborate on the various possible combinations.

In addition, the various different embodiments of the present disclosure may also be combined in any manner, as long as such combinations do not depart from the spirit of the present disclosure, and they shall likewise be regarded as part of the content disclosed herein.

## Claims

1. A high-voltage interlock loop fault detection method, comprising:
in response to detecting a high-voltage power-on request, performing fault detection on a high-voltage interlock loop to determine fault information of the high-voltage interlock loop, wherein the fault information is configured to represent whether the high-voltage interlock loop is faulty (S101); and
if the high-voltage interlock loop is not faulty, controlling a high-voltage system in which the high-voltage interlock loop is located to be powered on, and performing fault detection on the high-voltage interlock loop to determine fault information of the high-voltage interlock loop after power-on (S102), wherein
duration of the fault detection performed before the high-voltage system is powered on is less than duration of the fault detection performed after the high-voltage system is powered on.

2. The method according to claim 1, wherein performing fault detection on the high-voltage interlock loop to determine the fault information of the high-voltage interlock loop comprises:
performing a plurality of times of consecutive fault detection on the high-voltage interlock loop to determine the fault information of the high-voltage interlock loop.

3. The method according to claim 2, wherein the fault information comprises a fault result and a fault type, and
the performing the plurality of times of consecutive fault detection on the high-voltage interlock loop to determine the fault information of the high-voltage interlock loop comprises:
generating a plurality of consecutive first pulse signals;
for each first pulse signal, sending the first pulse signal to a high-voltage plug; collecting the first pulse signal and a second pulse signal that is correspondingly output by the high-voltage plug; based on the first pulse signal and the second pulse signal, determining the fault type of the high-voltage interlock loop, or determining that the high-voltage interlock loop is not faulty; and
determining the fault result of the high-voltage interlock loop based on each fault type.

4. The method according to claim 3, wherein a signal period of the first pulse signal generated before the high-voltage system is powered on is less than a signal period of the first pulse signal generated after the high-voltage system is powered on.

5. The method according to claim 4, wherein times of fault detection performed in a fault detection cycle before the high-voltage system is powered on is equal to or less than times of fault detection performed in a fault detection cycle after the high-voltage system is powered on.

6. The method according to claim 3, wherein a number of first pulse signals generated in a fault detection cycle before the high-voltage system is powered on is less than a number of first pulse signals generated in a fault detection cycle after the high-voltage system is powered on.

7. The method according to claim 6, wherein a signal period of the first pulse signal generated before the high-voltage system is powered on is equal to a signal period of the first pulse signal generated after the high-voltage system is powered on.

8. The method according to any one of claims 3 to 7, wherein based on the first pulse signal and the second pulse signal, determining the fault type of the high-voltage interlock loop comprises:
determining a signal collection period and a first pulse width of the first pulse signal, and a second pulse width of the second pulse signal; and
determining the fault type of the high-voltage interlock loop based on the signal collection period, the first pulse width, and the second pulse width.

9. The method according to claim 8, wherein the fault type comprises open circuit, short circuit to ground, short circuit to power supply, and invalid pulse signal; and
determining the fault type of the high-voltage interlock loop based on the signal collection period, the first pulse width, and the second pulse width comprises:
if the signal collection period is the same as a signal generation period of the first pulse signal, the first pulse width is the same as a pulse generation width of the first pulse signal, and the second pulse width is zero, determining that the fault type of the high-voltage interlock loop is the open circuit;
if both the first pulse width and the second pulse width are equal to zero, determining that the fault type of the high-voltage interlock loop is the short circuit to ground;
if the signal collection period is the same as the signal generation period, the first pulse width is the same as the pulse generation width, and the second pulse width is equal to the signal generation period, determining that the fault type of the high-voltage interlock loop is the short circuit to power supply; and
if the signal collection period is different from the signal generation period, or the first pulse width is different from the pulse generation width and the first pulse width is not equal to zero, determining that the fault type of the high-voltage interlock loop is the invalid pulse signal.

10. The method according to any one of claims 3 to 9, wherein determining the fault result of the high-voltage interlock loop based on each fault type comprises:
when a ratio of a number of fault types to times of detection is greater than a preset ratio, determining that the high-voltage interlock loop is faulty, wherein the times of detection is a sum of the number of fault types and times of non-fault detection.

11. A high-voltage interlock loop fault detection system (200), comprising a controller (201); and
the controller being configured to:
in response to detecting a high-voltage power-on request, perform fault detection on a high-voltage interlock loop to determine fault information of the high-voltage interlock loop, wherein the fault information is configured to represent whether the high-voltage interlock loop is faulty; and
if the high-voltage interlock loop is not faulty, control a high-voltage system in which the high-voltage interlock loop is located to be powered on, and perform fault detection on the high-voltage interlock loop to determine fault information of the high-voltage interlock loop after power-on, wherein
duration of the fault detection performed before the high-voltage system is powered on is less than duration of the fault detection performed after the high-voltage system is powered on.

12. The fault detection system according to claim 11, wherein the fault information comprises a fault result and a fault type; and
the fault detection system further comprises: a signal generator (202), a signal detection unit (203), and a signal feedback unit (204), wherein the signal detection unit is connected to a high-voltage plug (205), and the signal generator is connected to the signal feedback unit; and
the controller is separately connected to the signal generator, the signal detection unit, and the signal feedback unit, and is configured to:
control the signal generator to generate a plurality of consecutive first pulse signals;
for each first pulse signal, send the first pulse signal to the high-voltage plug; collect the first pulse signal generated by the signal generator through the signal feedback detection unit, and detect a second pulse signal correspondingly output by the high-voltage plug through the signal detection unit; and based on the first pulse signal and the second pulse signal, determine the fault type of the high-voltage interlock loop, or determine that the high-voltage interlock loop is not faulty; and
determine the fault result of the high-voltage interlock loop based on each fault type.

13. A battery management system, comprising the high-voltage interlock loop fault detection system according to claim 11 or 12.

14. An electric energy device, comprising the battery management system according to claim 13.

15. A computer-readable storage medium, wherein the computer-readable storage medium stores a computer program, and when the program is executed by a processing apparatus, steps of the method according to any one of claims 1 to 10 are implemented.
